(19) **Europäisches Patentamt / European Patent Office / Office européen des brevets**

(11) **EP 4 390 499 B1**

(12) # EUROPEAN PATENT SPECIFICATION

(45) Date of publication and mention
of the grant of the patent:
**03.06.2026 Bulletin 2026/23**

(21) Application number: **22425062.1**

(22) Date of filing: **22.12.2022**

(51) International Patent Classification (IPC):
**G02B 26/06** $^{(2006.01)}$  **G01J 9/00** $^{(2006.01)}$

(52) Cooperative Patent Classification (CPC):
**G01J 9/00; G02B 26/06**

(54) **ADAPTIVE OPTICAL SYSTEM AND METHOD FOR ADAPTIVELY CORRECTING AN OPTICAL RADIATION**

ADAPTIVES OPTISCHES SYSTEM UND VERFAHREN ZUR ADAPTIVEN KORREKTUR EINER OPTISCHEN STRAHLUNG

SYSTÈME OPTIQUE ADAPTATIF ET PROCÉDÉ DE CORRECTION ADAPTATIVE D'UN RAYONNEMENT OPTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**26.06.2024 Bulletin 2024/26**

(73) Proprietors:
• **MBDA ITALIA S.p.A.**
  **00131 Roma (IT)**
• **MBDA Deutschland GmbH**
  **86529 Schrobenhausen (DE)**

(72) Inventors:
• **Marchi, Gabriele**
  **81669 München (DE)**
• **Theobald, Christian**
  **86153 Augsburg (DE)**
• **Haag, Peter**
  **95444 Bayreuth (DE)**

• **Dietrich, Stephan**
  **86916 Kaufering (DE)**
• **Wingerath, Henrik**
  **86157 Augsburg (DE)**
• **Firpi, Stefano**
  **Portovenere, La Spezia (IT)**

(74) Representative: **Carangelo, Pierluigi et al**
**Jacobacci & Partners S.p.A.**
**Via Tomacelli 146**
**00186 Roma (IT)**

(56) References cited:
**US-A1- 2006 022 115     US-A1- 2022 018 718**

• MARCHI G ET AL: "Adaptive optics solutions for turbulence mitigation in different scenarios", ATMOSPHERIC OPTICS IV: TURBULENCE AND PROPAGATION, SPIE, 1000 20TH ST. BELLINGHAM WA 98225-6705 USA, vol. 8161, no. 1, 8 September 2011 (2011-09-08), pages 1 - 13, XP060018523, DOI: 10.1117/12.892004

## Description

## FIELD OF THE INVENTION

The present invention relates to the technical field of controllable optical systems for mitigating possible degradations of the performance thereof, for example due to atmospheric effects such as turbulence, deep turbulence, scintillation, or non-ideal situations in general. In particular, the present invention relates to an adaptive optical system. Such an adaptive optical system can be used in applications such as: power lasers, optical communications in free space, LIDAR, remote detecting systems, LDEWs (Laser Directed Energy Weapons). The present invention also relates to a method for adaptively correcting an optical radiation.

## BACKGROUND ART

As it is known, the atmosphere induces aberrations and phase errors in the optical radiations passing therethrough. For this reason, optical systems which adopt the propagation of optical radiation in the atmosphere generally require a recovery of the aberrations and phase errors induced by the propagation in the atmosphere.

To reduce or eliminate the aforesaid aberrations and the aforesaid phase errors, adaptive optical systems have been developed which generally comprise an optical device configured for emitting and/or reflecting and/or transmitting an optical radiation having a wavefront, a wavefront quality measurement module of the optical radiation, a wavefront correction module controllable for reducing or eliminating a wavefront error.

The use of adaptive optical systems is convenient or appropriate for several reasons. For example, atmospheric turbulence influences the propagation path of optical radiation in the air and this alters the phase relationships within a common path of light rays. When transmitting light through the atmosphere, phase alteration can distort the optical beam, blur it, or simply reduce light intensity due to mismatched phases. The result is the deformation of the optical path and this can cause various drawbacks.

One of said drawbacks is the reduction of the energy transport efficiency along a path. In a laser device, this requires an increase in the power of the optical source to compensate for the reduction in efficiency. However, the increase in power causes negative effects due for example to blooming and however it is not always possible to have adequately powerful sources. Moreover, in severe scintillation conditions, increasing the power of the optical source could also not be a solution because, due to the change of the intensity pattern on the pupil of an imaging system during the time, the light levels can change from extremely low to intensity saturation levels. Increasing the power of the optical source could solve the first issue but worsen the second one. A further drawback is the reduction of the beam quality, which causes a reduction in the effective operating distance for electrooptical systems (e.g., viewers) or decreases the sensitivity of detection systems. A further drawback is the increased signal noise, which negatively affects false negatives or reduces the bandwidth in optical communication.

The inhomogeneity of the refraction index of the air produced by the atmospheric turbulence produces a dynamic and almost unpredictable change in the spot size of the laser beam on targets. In consequence the useful range for engaging targets can change from one or two kilometers to few hundred meters.

Atmospheric turbulence effects on laser beams are usually corrected by adaptive optics methods and systems. In these methods and systems, the wavefront of light propagating from the target (either generated from it or reflected) is measured. The wavefront measure is then used to calculate the correction to be given to the wavefront of the laser.

In the prior art adaptive optics methods and systems, the employ of Shack-Hartmann wavefront sensor in conjunction with one or more correction elements such as tip-tilt mirrors or deformable mirrors has gained most attention. The procedure distinguishes itself for simplicity united with a high degree of both reliability and correction speed. Unfortunately, in a situation where strong atmospheric turbulence is present or the observation distance is considerable, strong scintillation effects emerge. These effects are detrimental for a Shack-Hartmann sensor and lead to overwhelming/significant errors in the reconstruction of the wavefront.

Since Shack-Hartmann sensors have in general an array of lenslets that define an array of sub-apertures, a suitable countermeasure to the problem of the strong scintillation consists. of enlarging the diameter of the sub-apertures corresponding to each lenslet, which in practice, works towards enlarging the lenslet diameter or to reduce the input diameter of the beam at the entrance pupil of the wavefront sensor. It is well known that the variance of the intensity on the pupil depends on the diameter of the Aperture $D$ as:

$$\sigma_I^2(D) = A(D)\sigma_I^2(0)$$

where $A(D)$ is the so-called aperture averaging factor ($<1$) dependent on the aperture of the optics and $\sigma_I^2(0)$ is the scintillation index as usual taken for a point-like detector which is the maximum value of the scintillation possible. The averaging factor A(D) can be assumed to behave ~1/D for dimensions of the aperture comparable to the Fresnel length $L_F = \sqrt{2\lambda L}$ where $\lambda$ is the wavelength and L the optical path in the atmosphere.

This expedient has however a backlash because together with the number of lenslets the sampling accuracy of the wavefront drops, and therefore, in very strong turbulence scenarios only a rough reconstruction of the wavefront can be achieved.

To avoid compromises in the wavefront correction resolution, alternative solutions to the Shack-Hartmann sensors have already' been investigated. In particular, indirect wavefront correction techniques based on optimization algorithms have been extensively studied (Aubailly, Mathieu, and Mikhail A. Vorontsov. "Scintillation resistant wavefront sensing based on multi-aperture phase reconstruction technique", JOSA A 29.8, 2012: 1707-1716). These techniques use an optimization procedure to maximize the value of a metric obtained from individual signals which are only mildly affected from scintillation - such as the sharpness of an image.

Even though these techniques are significantly more robust to scintillation effects they suffer from much a slower correcting procedure compared to direct correction like a Shack-Hartmann based system. The correction starts from a random or conventional configuration of the actuators of the deformable mirror and proceeds to improving it iteratively. It is clear that a complete improvement run has to be realized within the correlation' time of the turbulence, before the turbulence pattern changes significantly. One of the most used algorithms is the Stochastic Parallel Gradient Descent (SPGD), popular because of both its simplicity and iteration speed. Typically, between 100 and 200 iteration steps are performed to achieve a wavefront correction. Considering a typical correlation time of 1 ms, this means that each step of the optimization should take less than 50 $\mu$s or the frequency of the changes on the actuators should reach 200kHz. Such speed is extremely demanding not only from the computational point of view, but even more though, from a hardware perspective.

US 8,025,425 discloses a beaconless adaptive optics system based on the joint application of a Shack-Hartmann sensor and an SPGD algorithm for wavefront correction. The variance of phase gradients measured with the Shack-Hartmann sensor are used as a metric for an SPDG algorithm. However, the performances of the disclosed adaptive optics system are negatively affected by strong scintillation effects. Other relevant prior art can be found in US2022/018718 A.

A general object of the present disclosure is to provide an adaptive optical system which allows to remedy in whole, or at least in part, the problems described above with reference to the adaptive optical systems of the background art.

The aforesaid object, as well as other objects which will become clearer hereinafter, are achieved by an adaptive optical system as defined in claim 1. Preferred and advantageous embodiments of the aforesaid adaptive optical system are defined in the appended dependent claims.

The invention will be better understood from the following detailed description of particular embodiments thereof, given by way of non-limiting example, with reference to the accompanying drawings which are briefly described in the following paragraph. In the accompanying drawings, similar or identical elements are indicated with the same reference signs.

**BRIEF DESCRIPTION OF THE DRAWINGS**

In the accompanying drawings:

- Figure 1 shows a block diagram of an exemplary and non-limiting embodiment of an adaptive optical system;

- Figure 2 shows an example of pattern formed by an optical signal on a Shack-Hartmann wavefront sensor where no scintillation is present;

- Figure 3 shows an example of pattern formed by an optical signal on a Shack-Hartmann wavefront sensor where scintillation is present;

- Figure 4 shows an example of pattern formed by an optical signal on a Shack-Hartmann wavefront sensor where scintillation is present, wherein the pattern was obtained by reducing the number of lenslets and enlarging the sub-apertures diameter of the Shack-Hartman wavefront sensor;

- Figure 5 shows a flow chart of an exemplary and non-limiting embodiment of a method for adaptively correcting an optical radiation.

**DETAILED DESCRIPTION**

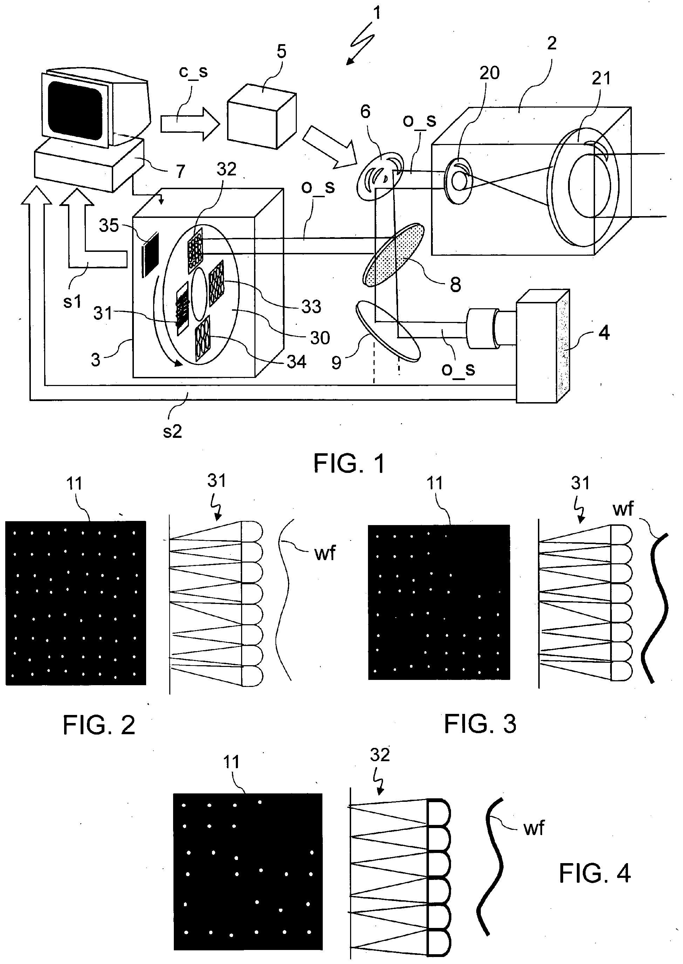

Fig. 1 shows an exemplary and non-limiting embodiment of an adaptive optical system 1. The aforesaid adaptive optical system 1. may be applied in several fields, such as power lasers, optical communications in free space, LIDAR, remote detection systems, LDEW. In particular, with regard to high power lasers, the adaptive optical system 1 can be used to concentrate a high optical power on an object or target, for example to work or modify or destroy the object or target, with possible uses in both civil and military fields.

The depiction of the diagram of the adaptive optical system 1 of Fig. 1 is not to scale, thus it is possible to envisage that the parts forming it are arranged in a spatial concentration relationship or a distributed arrangement relationship. Furthermore, the adaptive optical system 1 can be arranged in whole or in part on a fixed platform or on a movable platform, for example on one or more fixed stations and/or on one or more 'land, naval, air or space vehicles.

The adaptive optical system 1 comprises at least one optical device 2 which is configured for emitting and/or reflecting and/or transmitting an optical radiation o_s having a wavefront. The aforesaid optical radiation o_s is, for example, a laser ray or comprises a plurality of laser rays which form a relatively concentrated beam of laser rays. Said optical radiation o_s preferably has an overall optical power greater than 5 kW, or more preferably greater than 10 kW, for example equal to 20kW or 50 kW. However, possible embodiments are not excluded in which the optical radiation o_s has a much lower power than those indicated above. According to an advantageous embodiment, the optical device 2 comprises one or more optical collimators 20, 21.

The optical device 2 may comprise a plurality of opticaldevices, for example a plurality of lasers, and/or a plurality of mirrors and/or a plurality of lenses. The optical device 2 can also comprise electromechanical or electrooptical devices or systems or elements which together allow to emit and/or reflect and/or transmit an optical radiation o_s intended to be transmitted by propagation through the atmosphere.

The adaptive optical system 1 further comprises a first wavefront quality measurement module 3 adapted to acquire a first wavefront error measure of the optical radiation o_s to provide a first signal s1 representative of the first wavefront error measure. The aforesaid first signal s1 is for example an electrical signal, but possible implementations in which the first signal s1 is a radio signal or an optical signal are not excluded.

For the purposes of the present description and as it is known to a man skilled in the field of optical systems, a wavefront error is represented by a deviation of the shape of the wavefront with respect to the wavefront of a plane wave. The less is said deviation, the higher is the quality of the wavefront.

In accordance with an advantageous and non-limiting embodiment, the first wavefront quality measurement module 3 comprises at least one Shack-Hartmann wavefront sensor. According to alternative embodiments, the first wavefront quality measurement module 3 comprises a curvature sensor.

The adaptive optical system 1 further comprises a second wavefront quality measurement module 4 adapted to acquire a second wavefront error measure of the optical radiation o_s to provide a second signal s2 representative of the second wavefront error measure. The aforesaid second signal s2 is for example an electrical signal, but possible implementations in which the second signal s2 is a radio signal or an optical signal are not excluded.

In accordance with an advantageous and non-limiting embodiment, the second wavefront quality measurement module 4 comprises at least one photo camera or video camera, preferably a high-speed and high-resolution video camera.

According to an embodiment, the first wavefront quality measurement module 3 and the second wavefront quality measurement module 4 are configured to receive an optical signal obtained from the optical radiation o_s or related to said optical signal o_s, for example an optical signal deriving from a reflection of the aforesaid optical radiation o_s or obtained by tapping or splitting a portion of the aforesaid optical radiation o_s or obtained by acquiring an image of the aforesaid optical radiation o_s by one or more imaging devices such as cameras, video cameras or thermal cameras. The wavefront quality measurement modules 3, 4 can also measure or estimate the wavefront error of the optical radiation o_s based on a signal reflected or emitted by a remote object with respect to the optical device 2, such as a target or a beacon, or based on image analysis of a remote object.

In the particular and non-limiting embodiment depicted in Fig.1 the adaptive optical system 1 comprises an optical' beam splitter 8 configured for splitting the optical radiation o_s to direct it, or a respective portion thereof, towards both said first wavefront quality measurement module 3 and said second wavefront quality measurement module 4. Moreover, in the example of Fig. 1 the adaptive optical system 1 comprises a mirror 9 between the optical beam splitter 8 and the second wavefront quality measurement module 4. This mirror 9 has preferably the only function of deviating a split portion the optical radiation o_s towards the second wavefront quality measurement module 4. In other words, the mirror 9 preferably does not perform any correction of the optical radiation o_s.

The adaptive optical system 1 comprises at least one wavefront correction module 5, 6 adapted to modify the optical radiation o_s to reduce or eliminate or minimize the wavefront error. In accordance with an embodiment, the wavefront correction module 5, 6 comprises at least one driver 5 and at least one optical component 6 which is configurable by the driver 5 to vary at least one emission and/or reflection and/or transmission parameter of the optical component 6. The driver 5 is configured to receive in input a control signal c_s to configure the optical component 6. The optical component 6 comprises at least one actuator.

In accordance with an embodiment, the wavefront correction module 5, 6 comprises a plurality of optical components 6. In this case, it can be envisaged that the optical component 6 comprises a plurality of actuators, in which each actuator is preferably operatively associated with a respective optical component 6.

In the case in which the wavefront correction module 5, 6 comprises a plurality of optical components 6, the wavefront correction module 5, 6 may be configured to receive a plurality of control signals c_s, for example each one dedicated to control a respective optical component 6.

In accordance with an embodiment, the aforesaid optical component 6 comprises at least one deformable and/or movable mirror. Such a deformable and/or movable mirror allows for example to vary the direction and/or focus the optical radiation o_s. In accordance with an embodiment, the optical component 6 comprises an array of deformable and/or movable mirrors, for example a bidimensional array, for example a square, rectangular, hexagonal or circular array, each mirror of the array being for example associated with a respective optical source, for example each mirror of the array being associated with a respective laser source. As an alternative, a plurality of the mirrors of the array is, or all the mirrors of the array are, associated with a single laser source, that is to say with a same laser source. Therefore, in the above embodiments, the resulting optical radiation o_s is a beam of laser rays which can, for example, be focused by controlling the array of deformable and/or movable mirrors or other actuators.

For example, the actuator provided into the optical component 6 is, or comprises, at least one electromechanical actuator, preferably a piezoelectric actuator, more preferably a two-axis piezoelectric actuator. If the optical component 6 comprises a deformable and/or movable mirror, the electromechanical actuator is operatively coupled to the mirror to deform it along one or more axes and/or tilt it along one or more axes and/or translate it along one or more axes.

The adaptive optical system 1 comprises a processing module 7 operatively connected to the first wavefront quality measurement module 3 to receive in input the first signal s1 and operatively connected to the second wavefront quality measurement module 4 to receive in input the second signal s2. The processing module 7 is configured to output, based on the first signal s1 and the second signal s2, a control signal c_s for controlling said wavefront correction module 5, 6.

The processing module 7 is adapted to control the wavefront correction module 5, 6 to reduce or eliminate the wavefront error measured, or estimated, by the first wavefront quality measurement module 3 and by the second wavefront quality measurement module 4.

According to an advantageous and non-limiting embodiment, the processing module 7 is or comprises an SoC, i.e., a so-called System on a Chip.

The first wavefront quality measurement module 3 is configured for sampling a plurality of spots, e.g. an array of spots, of the optical radiation o_s according to a sampling resolution that can be controlled by the processing module 7. According to an advantageous embodiment, the processing module 7 is configured to change the sampling resolution of the first wavefront quality measurement module 3 by changing a number and/or a dimension of said spots. For example, changing the dimension of a spot is obtained by changing or selecting the diameter of the spot.

For example, if the first wavefront quality measurement module 3 comprises a Shack-Hartmann sensor, advantageously said sensor comprises an optical sensor 35 and further comprises at least one array of lenslets 31-34 whose dimensions and/or number can be changed in a controllable way, so that the number and/or the dimension of spots of the optical radiation o_s projected on the optical sensor 35 can be changed in a controllable way. In this way, the processing module 7 can control the sampling resolution of the first wavefront quality measurement module 3. For example, changing the dimension of a lenslet is obtained by changing or selecting the diameter of the lenslet.

According to a particularly advantageous embodiment, the Shack-Hartmann sensor comprises a plurality of interchangeable arrays of lenslets 31-34, wherein said arrays of lenslets 31-34 differ from each other in dimensions and/or number of their lenslets. Preferably, said arrays of lenslets 31-34 are bidimensional arrays hiving the same width and length and having the same focal length.

According to a preferred embodiment, the Shack-Hartmann sensor comprises a revolving wheel 30 that supports said plurality of arrays of lenslets 31-34. The resolution of the first wavefront quality measurement module 3 can be controlled by controlling an angular position of said revolving wheel 30. For example, the revolving wheel 30 is rotated by a motor (not shown in the figures), for example a stepped motor or a servomotor, controlled by the processing module 7. In the embodiment shown in Fig. 1, the first wavefront quality measurement module 3 comprises four arrays of lenslets 31-24 but this number is not limiting and the number of arrays of lenslets 31-34 can be lower or greater.

According to another possible embodiment, the Shack Hartmann sensor comprises only one array of lenslets and the first wavefront quality measurement module 3 comprises an optical beam reducer and expander controllable by the processing module 7 to change the effective region of the lenslet array that is used for sampling the optical radiation o_s.

The processing module 7 is configured to control the first wavefront quality measurement module 3 to decrease its sampling resolution until the processing module 7 determines that the wavefront of said optical radiation o_s can be reconstructed. If the processing module 7 determines that the wavefront of said optical radiation o_s can be reconstructed, the processing module 7 is configured to output the control signal c_s to perform a first correction through the wavefront correction module 5, 6.

For example, for performing said first correction the shape of the wavefront of the optical radiation o_s is reconstructed by the processing module 7 and the processing module outputs 7 the control signal c_s for driving the actuator 5 of the optical component 6 to correct the wavefront error. Preferably, said first correction is based on a Penrose inversion of the influence matrix.

It is therefore clear that the first correction performed through the first wavefront quality measurement module 3, the processing module 7 and the wavefront correction module 5, 6 is a direct correction, in the sense that this correction is based on the use of a wavefront sensor, such as a Shack Hartmann sensor, and is based on the reconstruction of the wavefront and the calculation of commands that are required for correcting the wavefront error, i.e. the wavefront distortion. For this reason, it is possible to call the first correction also "direct correction".

The entity of the atmospheric turbulence influences the determination performed by the processing module 7 on whether the wavefront can be reconstructed, or better on whether the wavefront can be reconstructed in a reliable way. For example, with reference to Fig. 2, if the atmospheric turbulence is relatively low, and therefore no scintillation occurs, the wavefront wf of the optical radiation o_s is less distorted and no missing spots appears on a pattern, or array, of spots 11 sampled by the optical sensor 35 using a lenslet array 31 having a relatively higher number of lenslets of relatively reduced size (i.e. a relatively reduced diameter). This means that in this case the wavefront error is relatively low and that the wavefront wf can be reliably reconstructed, for example by interpolating said spots.

With reference to Fig. 3, if instead the atmospheric turbulence is relatively high, and therefore scintillation occurs, the wavefront wf of the optical radiation o_s is more distorted and several missing spots appear on the pattern, or array, of spots 10 sampled by the optical sensor 35 using the lenslet array 31 having a relatively higher number of lenslets of relatively reduced size, for example the same lenslet array 31 used for forming the pattern of spots shown in Fig. 2. This means that in this case the wavefront error is relatively high and the wavefront wf cannot be reliably reconstructed, for example by interpolating said missing spots. With reference to Fig. 4, always in the case in which the atmospheric turbulence is relatively high, by reducing the sampling resolution of the first wavefront quality measurement module 3 for example by using an array of lenslets 32having a relatively lower number of lenslets of relatively increased size, it is possible to reduce the number of missing spots in the image pattern 11 and more zones or portions of the distorted wavefront can be measured.

Therefore, in the case in which the first wavefront quality measurement module 3 comprises a plurality of array of lenslets 31-34, in the adaptive optical system 1 the first wavefront quality measurement module 3 is used to establish a setting of the most suitable lenslet array for addressing the problem of the scintillation. Preferably, the choice of the lenslet array is made starting with the lenslet array with the highest number of lenslets. The pattern on the optical sensor 35 is collected for three or more realizations of the atmospheric turbulence and is then evaluated by the processing module 7. Its aim is to determine as many correction points as possible to gain a base line for the missing ones to determine a reliable reconstruction. In an insufficient case, the lenslet array is replaced by the next one which contains less lenslets that are slightly larger. The procedure of array fitting or setting continues until the reconstruction is deemed reliable by the processing module 7. Preferably, the reliability of the wavefront reconstruction is evaluated searching for missing spots. For example, if two contiguous spots are missing, then the reconstruction cannot even rely on interpolation to get a reconstruction and the reconstruction is deemed as being unreliable. A further refinement is the binning of the different information of the lenslets if the signal of focused light of different lenslets is still too weak or noise is still too high.

As already explained, once the processing module 7 sets a sampling resolution of the first wavefront quality measurement module 3 that allows the processing module 7 to determine that the wavefront of the optical radiation o_s can be reconstructed, the wavefront correction module 5, 6 is controlled to reduce the wavefront error by performing the first correction.

After performing said first correction (or the "direct correction"), the processing module 7 is configured to execute an iterative routine of steps by acquiring wavefront error measures through the second wavefront quality measurement module 4 and outputting the control signal c_s to perform a second correction through the wavefront correction module 5, 6. According to an advantageous embodiment, said iterative routine of steps is an SPGD - Stochastic Parallel Gradient Descent - algorithm. According to a preferred embodiment, said iterative routine of steps is aimed to improve a quality metric of acquired images of the optical radiation o_s. For example, the quality metric is a sharpness metric of the optical radiation o_s. However, this is not the only embodiment possible, for example in an alternative embodiment the iterative routine of steps may be aimed to improve another quality metric, for example the intensity of the light of the optical radiation o_s passing through a pinhole.

According to an embodiment, said iterative routine of steps comprises:

S1 - a step of acquiring an image of the optical radiation o_s as corrected by the above explained first correction performed through the wavefront correction module 5, 6;

S2 - a step of calculating with said processing module 7 a value $J(k)$ of a quality metric of the image acquired in step S1, wherein k=1;

S3 - a step of driving the wavefront correction module 5, 6 based on the value $J(k)$ for performing through the correction module 5, 6 a second (or further) correction;

S4 - a step of acquiring a further image of the optical radiation o_s as corrected in step S3;

S5 - a step of calculating with said processing module 7 a further value $J(k+1)$ the of quality metric for the image acquired in step S4;

S6 - a step of calculating a difference between the value $J(k)$ calculated in step S2 with the value $J(k+1)$ calculated in step S5 and if said difference is greater than (or greater than / equal to) a threshold difference repeating steps S3-S6 by increasing k according to k=k+1, otherwise: - performing a new first correction through the first wavefront quality measurement module 3, that is say perform again the "direct correction".

After that the new cycle of the direct correction is performed, the iterative routine of steps S1-S6 is executed again and so on.

It is therefore clear that the second correction performed by the iterative routine of steps can be called also "indirect correction" since, in contrast with the first correction, it is not based on a reconstruction of the wavefront.

For example, in the case in which:

- The metric **J(k)** is the so-called sharpness metric;

- The iterative routine is made according to an SPGD algorithm;

- The correction module 5, 6 comprises a deformable mirror that can be deformed by setting actuating positions of mirror actuators;

the iterative routine can be as performed as follows:

S1 - acquiring an image of the optical radiation o_s as corrected by the above explained first correction performed through the wavefront correction module 5, 6;

S2 - calculating the metric **J(k)** the maximum of which corresponds to a correct wavefront, with k=1; in case of an extended object or a point-like source this could be evaluated using the so-called Sharpness metric:

$$ J(k) = \int \int dx \, dy \, I^2(x,y) $$

where **I(x,y)** is the gray value in the position (x,y) of the acquired image; the higher the value of **J(k)** the closer the wavefront is to the correct one;

S3 - Changing the actuator positions **u_i** of the deformable mirror for a small quantity $\pm \delta u_i$, wherein preferably a positive or negative sign is randomly assigned to each mirror actuator;

S4 - acquiring a further image of the optical radiation o_s as corrected in step S3;

S5 - calculating with said processing module 7 a further value **J(k+1)** the of quality metric for the image acquired in step S4;

S6 calculating the difference $\delta J = J(k) - J(k+1)$ and, if said difference is greater than (or greater than or equal to) a threshold $\varepsilon$, then repeating steps S3-S6 by setting k=k+1 and by changing in step S3 the position of the mirror actuators according to:

$$ u_i' = u_i + \gamma \delta u_i \delta J $$

Otherwise, if the difference $\delta J$ is smaller than (or smaller than o equal to) the threshold value $\varepsilon$, then stop the iterative routine and perform a new cycle of the first correction through the first wavefront quality measurement module 3, that is say perform again the direct correction.

For obtaining good correction results, the whole correction procedure (made up by one cycle of the direct or first correction and by one or more cycles of the second or indirect correction), is completed within the correlation time of the atmospheric turbulence.

Filtering (e.g. Kalman Filter,...) of the signals and actuator commands could be used to further increase dynamic, reliability and stability of the system. Results from different measurements could easily be merged with this technique to achieve a more stable and performant solution.

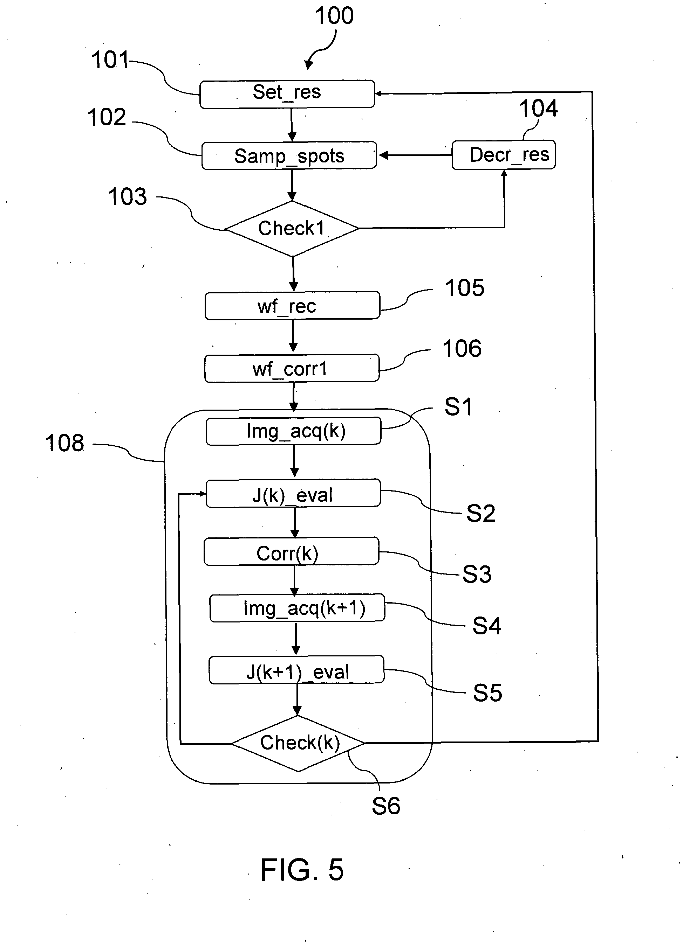

With reference to Fig. 5, the above description for the adaptive optical system 1 also extends to a correction method 100 for adaptively correcting an optical radiation o_s having a wavefront wf comprising the steps of:

(i) setting a sampling resolution 101 ("Set_res") of a first wavefront quality measurement module 3;

(ii) sampling 102 ("Samp_spots") said optical radiation o_s with the first wavefront quality measurement module 3 for obtaining a plurality of spots;

(iii) analyzing 103 ("Check1") the plurality of spots for determining whether or not said wavefront can be reconstructed;

(iv) if it is determined that said wavefront cannot be reconstructed, decreasing 104 ("Decr_res") said sampling resolution and repeating steps (ii) and (iii) until it is determined that the wavefront wf can be reconstructed;

(v) acquiring a first wavefront error measure 105 ("wf_rec") through the first wavefront quality measurement module 3;

(vi) performing a first correction 106 (wf_corr1") of said optical radiation o_s based on said first wavefront error measure by controlling a wavefront correction module 5, 6;

(vii) executing an iterative routine of steps 108 for performing a second correction of said optical radiation o_s by controlling the wavefront correction module 5, 6 based on error measures acquired through a second wavefront quality measurement module 4.

As already explained, according to an embodiment said iterative routine of steps is an SPGD - Stochastic Parallel Gradient Descent - algorithm.

As already explained, according to an embodiment, the decreasing step 104 is performed by changing a number and/or a dimension of said spots.

As already explained, according to an embodiment said iterative routine of steps 108 comprises:

S1 - a step of acquiring an image ("Img_acq(k)") of the optical radiation o_s as corrected by the above step of performing a first correction 106;

S2 - a step of calculating ("J(k)_eval) a value *J(k)* of a quality metric of the image acquired in step S1, wherein k=1;

S3 - a step of driving ("Corr(k)") the correction module 5, 6 based on the value *J(k)* for performing through the wavefront correction module 5, 6 a second (or further) correction;

S4 - a step of acquiring ("Img_acq" (k+1)") a further image of the optical radiation o_s as corrected in step S3;

S5 - a step of calculating ("J(k+1)_Eval") a further value *J(k+1)* the of quality metric for the image acquired in step S4;

S6 - a step of calculating a difference ("Check(k)) between the value *J(k)* calculated in step S2 with the value *J(k + 1)* calculated in step S5 and, if said difference is greater than (or greater than / equal to) a threshold difference, repeating steps S3-S6 by increasing k according to k=k+1 (wherein k is therefore an integer number that represents the progressive number of the iterations performed in the iterative routine 108, otherwise;

- performing a new first correction through the steps 101-106.

According to an embodiment, it is possible to foresee that a minimum number *k_min* of iterations of the iterative routine 108 have to be performed before switching again to steps 101-106 of the first direct correction. For example, *k_min* is an integer number comprised between 5 and 20.

After that a new cycle of the direct correction is performed though the steps 101-106, the iterative routine 108 of steps S1-S6 is executed again and so on.

Further features of the correction method 100 can be derived directly from the above description for the adaptive optical system 1 and for this reason they will not be described again.

From the above, it is clear that an adaptive optical system 1 of the type described above allows to fully achieve the preset objects in terms of overcoming the drawbacks of the background art. In fact, an adaptive optical system 1 of the type described has shown to be very effective also in presence of strong atmospheric turbulence and therefore in presence of scintillation. The wavefront correction of the optical radiation o_s is performed by using a hybrid approach characterized by two subsequent correction stages, each of which is dedicated to one specific correction procedure. The first correction stage ("first correction" or "direct correction") is used to perform a direct pre-compensation and foresees a fast, albeit rough, setting of the correction module 5, 6 (e.g., of the deformable mirror), for example via a direct Shack-Hartmann procedure. The second correction stage ("second correction" or "indirect correction") refines the rough correction performed by the first stage by using an indirect iterative procedure. Since the indirect iterative procedure starts from a configuration of the wavefront correction module 5, 6 which is closer to the optimum of the metric in comparison to a procedure which had no pre-compensation step, the number of steps and therefore the convergence of the second correction stage in much faster and typically realizable with ordinary hardware and minimal computational load.

According to a non-limiting embodiment, the aforesaid adaptive optical system 1 can be comprised or integrated in a weapon system, for example in the case in which the optical device 2 comprises one or more high power lasers. With respect to what has been described above, the weapon system can include for example means for detecting and aiming a target, for example a radar system, and a shooting control system.

The embodiments and the constructional details may be broadly varied with respect to the above description disclosed by way of non-limiting example, without departing from the scope of the invention as defined in the appended claims.

**Claims**

1. An adaptive optical system (1) comprising:

- at least one optical device (2) adapted to emit and/or reflect and/or transmit an optical radiation (o_s) having a wavefront;
- a first wavefront quality measurement module (3) adapted to acquire a first wavefront error measure of the optical radiation (o_s) to provide a first signal (s1) representative of the first wavefront error measure;
- a second wavefront quality measurement module (4) adapted to acquire a second wavefront error measure of the optical radiation (o_s) to provide a second signal (s2) representative of the second wavefront error measure;
- a wavefront correction module (5,6) adapted to modify the optical radiation to reduce or eliminate the wavefront error;
- a processing module (7) operatively connected to the first wavefront quality measurement module (3) to receive in input the first signal (s1) and operatively connected to the second wavefront quality measurement module (4) to receive in input the second signal (s2) and output, based on the first signal (s1) and the second signal (s2), a control signal (c_s) for controlling said wavefront correction module (5, 6);

wherein:

- the first wavefront quality measurement module (3) is configured for sampling a plurality of spots of said optical radiation (o_s) according to a sampling resolution that can be controlled by the processing module (7);
- the processing module (7) is configured to control the first wavefront quality measurement module (3) to decrease its sampling resolution until the processing module (7) determines that a wavefront of said optical radiation (o_s) can be reconstructed and, after said determination, the processing module (7) is configured to output said control signal (c_s) to perform a first correction through said wavefront correction module (5,6);
- after performing said first correction, the processing module (7) is configured to execute an iterative routine by acquiring wavefront error measures through said second wavefront quality measurement module (4) and outputting said control signal to perform a second correction through said wavefront correction module (5,6).

2. An adaptive optical system (1) according to claim 1, wherein said iterative routine of steps is an SPGD - Stochastic Parallel Gradient Descent - algorithm.

3. An adaptive optical system (1) according to claims 1 or 2, wherein said processing module (7) is configured to change said resolution of said first wavefront quality measurement module (3) by changing a number and/or a dimension of said spots.

4. An adaptive optical system (1) according to any one of the previous claims, wherein the first wavefront quality measurement module (3) is or comprises a Shack-Hartmann sensor.

5. An adaptive optical system (1) according to claim 4, wherein said Schack-Hartmann sensor comprises at least one array of lenslets (31-34) whose dimensions and/or number can be changed in a controllable way.

6. An adaptive optical system (1) according to claim 4, wherein said Shack-Hartmann sensor comprises a plurality of interchangeable arrays of lenslets (31-34), wherein said arrays of lenslets (31-34) differ from each other in dimensions and/or number of their lenslets.

7. An adaptive optical system (1) according to claim 6, wherein said Shack-Hartmann sensor comprise a revolving wheel (35) that supports said plurality of arrays of lenslets (31-34), wherein the resolution of the first wavefront quality measurement module (3) can be controlled by controlling an angular position of said revolving wheel (35).

8. An adaptive optical system (1) according to any one of the previous claims, wherein said iterative routine of steps is aimed to improve a quality metric of acquired images of said optical radiation (o_s).

9. An adaptive optical system (1) according to claim 8, wherein said quality metric is a sharpness metric of said optical radiation (o_s).

10. An adaptive optical system (1) according to any one of the previous claims, wherein said second wavefront quality measurement module (4) comprises a 'high-speed and high-sensitivity camera or optical sensor.

11. An adaptive optical system (1) according to any one of the previous claims, comprising an optical beam splitter (8) configured for splitting said optical radiation (o_s) to direct it towards both said first wavefront quality measurement module (3) and said second wavefront quality measurement module (4).

12. A weapon system comprising an adaptive optical system (1) according to any one of the preceding claims, wherein said optical device (2) comprises one or more high power lasers.

13. A correction method (100) for adaptively correcting an optical radiation (o_s) having a wavefront (wf), comprising the steps of:

(i) setting a sampling resolution (101) of a first wavefront quality measurement module (3);
(ii) sampling (102) said optical radiation (o_s) with the first wavefront quality measurement module (3) for obtaining a plurality of spots;
(iii) analyzing (103) the plurality of spots for determining whether or not said wavefront can be reconstructed;
(iv) if it is determined that said wavefront cannot be reconstructed, decreasing (104) said sampling resolution and repeating steps (ii) and (iii) until it is determined that the wavefront (wf) can be reconstructed;
(v) acquiring a first wavefront error measure (105) through the first wavefront quality measurement module (3);
(vi) performing a first correction (106) of said optical radiation (o_s) based on said first wavefront error measure by controlling a wavefront correction module (5, 6);

(vii) executing an iterative routine of steps (108) for performing a second correction of said optical radiation (o_s) by controlling the wavefront correction module (5,6) based on measures acquired by a second wavefront quality measurement module (4).

14. A correction method (100) according to claim 13, wherein said iterative routine of steps is an SPGD - Stochastic Parallel Gradient Descent - algorithm.

15. A correction method (100) according to claims 13 or 14, wherein said decreasing step (104) is performed by changing a number and/or a dimension of said spots.

## Patentansprüche

1. Adaptives optisches System (1) umfassend:

- mindestens eine optische Vorrichtung (2), die eingerichtet ist, eine optische Strahlung (o_ s) aufweisend eine Wellenfront zu emittieren und/oder zu reflektieren und/oder zu übertragen;
- ein erstes Messmodul (3) der Wellenfrontqualität, das eingerichtet ist, eine erste Wellenfrontfehlermessung der optischen Strahlung (o_s) zu erfassen, um ein erstes Signal (s1) bereitzustellen, das für die erste Wellenfrontfehlermessung typisch ist;
- ein zweites Messmodul (4) der Wellenfrontqualität, das eingerichtet ist, eine zweite Wellenfrontfehlermessung der optischen Strahlung (o_s) zu erfassen, um ein zweites Signal (s2) bereitzustellen, das für die zweite Wellenfrontfehlermessung typisch ist;
- ein Wellenfrontkorrekturmodul (5, 6), das eingerichtet ist, die optische Strahlung zu ändern, um den Wellenfrontfehler zu reduzieren oder zu beseitigen;
- ein Verarbeitungsmodul (7), das operativ mit dem ersten Messmodul (3) der Wellenfrontqualität verbunden ist, um das erste Eingangssignal (s1) zu empfangen, und operativ mit dem zweiten Messmodul (4) der Wellenfrontqualität verbunden ist, um das zweite Eingangssignal (s2) zu empfangen, und basierend auf dem ersten Signal (s1) und dem zweiten Signal (s2) ein Steuersignal (c_s) zur Steuerung des Wellenfrontkorrekturmoduls (5, 6) auszugeben;

wobei:

- das erste Messmodul (3) der Wellenfrontqualität dazu konfiguriert ist, eine Mehrzahl von Flecken der optischen Strahlung (o_s) nach einer Abtastauflösung abzutasten, die durch das Verarbeitungsmodul (7) gesteuert werden kann;
- das Verarbeitungsmodul (7) dazu konfiguriert ist, das erste Messmodul (3) der Wellenfrontqualität zu steuern, um dessen Abtastauflösung zu reduzieren, bis das Verarbeitungsmodul (7) bestimmt, dass eine Wellenfront der optischen Strahlung (o_s) rekonstruiert werden kann, und, nach dieser Bestimmung, das Verarbeitungsmodul (7) dazu konfiguriert ist, das Steuersignal (c_s) auszugeben, um eine erste Korrektur mittels des Wellenfrontkorrekturmoduls (5, 6) durchzuführen;
- nach Durchführung der ersten Korrektur, das Verarbeitungsmodul (7) dazu konfiguriert ist, eine iterative Routine auszuführen, indem Wellenfrontfehlermessungen mittels des zweiten Messmoduls (4) der Wellenfrontqualität erfasst werden und das Steuersignal auszugeben, um eine zweite Korrektur mittels des Wellenfrontkorrekturmoduls (5, 6) durchzuführen.

2. Adaptives optisches System (1) nach Anspruch 1, wobei die iterative Routine von Schritten ein SPGD - Stochastischer Paralleler Gradientenabstieg Algorithmus ist.

3. Adaptives optisches System (1) nach den Ansprüchen 1 oder 2, wobei das Verarbeitungsmodul (7) dazu konfiguriert ist, die Auflösung des ersten Messmoduls (3) der Wellenfrontqualität zu ändern, indem eine Anzahl und/oder eine Abmessung der Flecken geändert wird.

4. Adaptives optisches System (1) nach einem der vorhergehenden Ansprüche, wobei das erste Messmodul (3) der Wellenfrontqualität ein Shack-Hartmann-Sensor ist oder ihn umfasst.

5. Adaptives optisches System (1) nach Anspruch 4, wobei der Shack-Hartmann-Sensor mindestens ein Array von Mikrolinsen (31-34) umfasst, dessen Abmessungen und/oder Anzahl steuerbar geändert werden können.

6. Adaptives optisches System (1) nach Anspruch 4, wobei der Shack-Hartmann-Sensor eine Mehrzahl von austauschbaren Arrays von Mikrolinsen (31-34) umfasst, wobei die Arrays von Mikrolinsen (31-34) hinsichtlich der Abmessungen und/oder der Anzahl ihrer Mikrolinsen voneinander verschieden sind.

7. Adaptives optisches System (1) nach Anspruch 6, wobei der Shack-Hartmann-Sensor ein Drehrad (35) umfasst, das die Mehrzahl von Arrays von Mikrolinsen (31-34) trägt, wobei die Auflösung des ersten Messmoduls (3) der Wellenfrontqualität durch Steuern einer Winkelposition des Drehrades (35) gesteuert werden kann.

8. Adaptives optisches System (1) nach einem der vorhergehenden Ansprüche, wobei die iterative Routine von Schritten das Ziel hat, eine Qualitätsmetrik von erfassten Bildern der optischen Strahlung (o_s) zu verbessern.

9. Adaptives optisches System (1) nach Anspruch 8, wobei die Qualitätsmetrik eine Schärfemetrik der optischen Strahlung (o_s) ist.

10. Adaptives optisches System (1) nach einem der vorhergehenden Ansprüche, wobei das zweite Messmodul (4) der Wellenfrontqualität eine hochgeschwindigkeits- und hochempfindliche Kamera oder einen optischen Sensor umfasst.

11. Adaptives optisches System (1) nach einem der vorhergehenden Ansprüche, umfassend einen optischen Strahlteiler (8), der dazu konfiguriert ist, die optische Strahlung (o_s) zu teilen, um sie sowohl zu dem ersten Messmodul (3) der Wellenfrontqualität als auch zu dem zweiten Messmodul (4) der Wellenfrontqualität zu leiten.

12. Waffensystem, umfassend ein adaptives optisches System (1) nach einem der vorhergehenden Ansprüche, wobei die optische Vorrichtung (2) einen oder mehrere Hochleistungslaser umfasst.

13. Korrekturverfahren (100) zur adaptiven Korrektur einer optischen Strahlung (o_s) aufweisend eine Wellenfront (wf), umfassend die folgenden Schritte:

(i) Einstellen einer Abtastauflösung (101) eines ersten Messmoduls (3) der Wellenfrontqualität;
(ii) Abtasten (102) der optischen Strahlung (o s) mit dem ersten Messmodul (3) der Wellenfrontqualität, um eine Mehrzahl von Flecken zu erhalten;
(iii) Analysieren (103) der Mehrzahl von Flecken, um zu bestimmen, ob die Wellenfront rekonstruiert werden kann oder nicht;
(iv) wenn es bestimmt wird, dass die Wellenfront nicht rekonstruiert werden kann, Reduzieren (104) der Abtastauflösung und Wiederholen der Schritte (ii) und (iii), bis es bestimmt wird, dass die Wellenfront (wf) rekonstruiert werden kann;
(v) Erfassen einer ersten Wellenfrontfehlermessung (105) mittels des ersten Messmoduls (3) der Wellenfrontqualität;
(vi) Durchführen einer ersten Korrektur (106) der optischen Strahlung (o_s) basierend auf der ersten Wellenfrontfehlermessung durch Steuern eines Wellenfrontkorrekturmoduls (5, 6);
(vii) Ausführen einer iterativen Routine von Schritten (108), um eine zweite Korrektur der optischen Strahlung (o_s) durch Steuern des Wellenfrontkorrekturmoduls (5, 6) basierend auf Messungen, die durch ein zweites Messmodul (4) der Wellenfrontqualität erfasst werden.

14. Korrekturverfahren (100) nach Anspruch 13, wobei die iterative Routine von Schritten ein SPGD - Stochastischer Paralleler Gradientenabstieg Algorithmus ist.

15. Korrekturverfahren (100) nach den Ansprüchen 13 oder 14, wobei der Reduzierungsschritt (104) durch Ändern einer Anzahl und/oder einer Abmessung der Flecken durchgeführt wird.

**Revendications**

1. Système optique adaptatif (1) comprenant :

- au moins un dispositif optique (2) adapté pour émettre et/ou réfléchir et/ou transmettre un rayonnement optique (o_s) ayant un front d'onde ;
- un premier module de mesure de la qualité du front d'onde (3) adapté pour acquérir une première mesure d'erreur de front d'onde du rayonnement optique (o_s) afin de fournir un premier signal (s1) représentatif de la première mesure d'erreur de front d'onde ;
- un second module de mesure de la qualité du front d'onde (4) adapté pour acquérir une seconde mesure d'erreur de front d'onde du rayonnement optique (o_s) afin de fournir un second signal (s2) représentatif de la seconde mesure d'erreur de front d'onde ;
- un module de correction de front d'onde (5, 6) adapté pour modifier le rayonnement optique afin de réduire ou d'éliminer l'erreur de front d'onde ;
- un module de traitement (7) relié opérationnellement au premier module de mesure de la qualité du front d'onde (3) pour recevoir en entrée le premier signal (s1) et relié opérationnellement au second module de mesure de la qualité du front d'onde (4) pour recevoir en entrée le second signal (s2) et délivrer, sur la base du premier signal (s1) et du second signal (s2), un signal de commande (c_s) pour commander ledit module de correction de front d'onde (5, 6) ;

dans lequel :

- le premier module de mesure de la qualité du front d'onde (3) est configuré pour échantillonner une pluralité de taches dudit rayonnement optique (o_s) selon une résolution d'échantillonnage pouvant être commandée par le module de traitement (7) ;

- le module de traitement (7) est configuré pour commander le premier module de mesure de la qualité du front d'onde (3) afin de diminuer sa résolution d'échantillonnage jusqu'à ce que le module de traitement (7) détermine qu'un front d'onde dudit rayonnement optique (o_s) peut être reconstruit et, après ladite détermination, le module de traitement (7) est configuré pour délivrer ledit signal de commande (c_s) afin d'effectuer une première correction au moyen dudit module de correction de front d'onde (5, 6) ;

après avoir effectué ladite première correction, le module de traitement (7) est configuré pour exécuter une routine itérative en acquérant des mesures d'erreur de front d'onde au moyen dudit second module de mesure de la qualité du front d'onde (4) et en délivrant ledit signal de commande afin d'effectuer une seconde correction au moyen dudit module de correction de front d'onde (5, 6).

2. Système optique adaptatif (1) selon la revendication 1,
   dans lequel ladite routine itérative d'étapes est un algorithme SPGD - Stochastic Parallel Gradient Descent

3. Système optique adaptatif (1) selon les revendications 1 ou 2, dans lequel ledit module de traitement (7) est configuré pour modifier ladite résolution dudit premier module de mesure de la qualité du front d'onde (3) en modifiant un nombre et/ou une dimension desdites taches.

4. Système optique adaptatif (1) selon l'une quelconque des revendications précédentes, dans lequel ledit premier module de mesure de la qualité du front d'onde (3) est ou comprend un capteur Shack-Hartmann.

5. Système optique adaptatif (1) selon la revendication 4, dans lequel ledit capteur Shack-Hartmann comprend au moins un réseau de microlentilles (31-34) dont les dimensions et/ou le nombre peuvent être modifiés de manière commandable.

6. Système optique adaptatif (1) selon la revendication 4, dans lequel ledit capteur Shack-Hartmann comprend une pluralité de réseaux interchangeables de microlentilles (31-34), lesdits réseaux de microlentilles (31-34) différant les uns des autres par les dimensions et/ou le nombre de leurs microlentilles.

7. Système optique adaptatif (1) selon la revendication 6, dans lequel ledit capteur Shack-Hartmann comprend une roue rotative (35) supportant ladite pluralité de réseaux de microlentilles (31-34), dans lequel la résolution du premier module de mesure de la qualité du front d'onde (3) peut être commandée en commandant une position angulaire de ladite roue rotative (35).

8. Système optique adaptatif (1) selon l'une quelconque des revendications précédentes, dans lequel ladite routine itérative d'étapes vise à améliorer une métrique de qualité d'images acquises dudit rayonnement optique (o_s).

9. Système optique adaptatif (1) selon la revendication 8, dans lequel ladite métrique de qualité est une métrique de netteté dudit rayonnement optique (o_s).

10. Système optique adaptatif (1) selon l'une quelconque des revendications précédentes, dans lequel ledit second module de mesure de la qualité du front d'onde (4) comprend une caméra ou un capteur optique à haute vitesse et à haute sensibilité.

11. Système optique adaptatif (1) selon l'une quelconque des revendications précédentes, comprenant un séparateur de faisceau optique (8) configuré pour diviser ledit rayonnement optique (o_s) afin de le diriger à la fois vers ledit premier module de mesure de la qualité du front d'onde (3) et vers ledit second module de mesure de la qualité du front d'onde (4).

12. Système d'arme comprenant un système optique adaptatif (1) selon l'une quelconque des revendications précédentes, dans lequel ledit dispositif optique (2) comprend un ou plusieurs lasers de forte puissance.

13. Procédé de correction (100) pour corriger de manière adaptative un rayonnement optique (o_s) ayant un front d'onde (wf), comprenant les étapes consistant à :

    (i) régler une résolution d'échantillonnage (101) d'un premier module de mesure de la qualité du front d'onde (3) ;
    (ii) échantillonner (102) ledit rayonnement optique (o_s) avec le premier module de mesure de la qualité du front d'onde (3) afin d'obtenir une pluralité de taches ;
    (iii) analyser (103) la pluralité de taches afin de déterminer si ledit front d'onde peut être reconstruit ou non ;

**EP 4 390 499 B1**

(iv) s'il est déterminé que ledit front d'onde ne peut pas être reconstruit, diminuer (104) ladite résolution d'échantillonnage et répéter les étapes (ii) et (iii) jusqu'à ce qu'il soit déterminé que le front d'onde (wf) peut être reconstruit ;
(v) acquérir une première mesure d'erreur de front d'onde (105) au moyen du premier module de mesure de la qualité du front d'onde (3) ;
(vi) effectuer une première correction (106) dudit rayonnement optique (o_s) sur la base de ladite première mesure d'erreur de front d'onde en commandant un module de correction de front d'onde (5, 6) ;
(vii) exécuter une routine itérative d'étapes (108) afin d'effectuer une seconde correction dudit rayonnement optique (o_s) en commandant le module de correction de front d'onde (5, 6) sur la base de mesures acquises par un second module de mesure de la qualité du front d'onde (4).

**14.** Procédé de correction (100) selon la revendication 13, dans lequel ladite routine itérative d'étapes est un algorithme SPGD - Stochastic Parallel Gradient Descent

**15.** Procédé de correction (100) selon les revendications 13 ou 14, dans lequel ladite étape de diminution (104) est effectuée en modifiant un nombre et/ou une dimension desdites taches.

FIG. 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8025425 B

- US 2022018718 A

**Non-patent literature cited in the description**

- **AUBAILLY, MATHIEU** ; **MIKHAIL A. VORONTSOV**. Scintillation resistant wavefront sensing based on multi-aperture phase reconstruction technique. *JOSA A*, 2012, vol. 29 (8), 1707-1716